# EUROPÄISCHE PATENTSCHRIFT

(11) **EP 3 479 538 B1**
(45) Veröffentlichungstag und Bekanntmachung des Hinweises auf die Patenterteilung: **07.06.2023**
(21) Anmeldenummer: 17732752.5
(22) Anmeldetag: 20.06.2017
(51) Int. Cl.: H04L 9/40, H04L 12/40, G05B 19/418, G05B 19/05

(54) **SICHERHEITSEINRICHTUNG MIT ORTSGEBUNDENEM SCHLÜSSELSPEICHER, SYSTEM UND VERFAHREN**
SECURITY APPARATUS HAVING A KEY MEMORY BOUND TO A SPECIFIC LOCATION, SYSTEM, AND METHOD
DISPOSITIF DE SÉCURITÉ COMPORTANT UNE MÉMOIRE DE CLÉS FIXE, SYSTÈME ET PROCÉDÉ

(30) Priorität: 04.07.2016 DE 102016008011
(43) Veröffentlichungstag der Anmeldung: 08.05.2019
(73) Patentinhaber: SEW-Eurodrive GmbH & Co, 76646 Bruchsal (DE)
(72) Erfinder: RITSCHEL, Andreas, 76706 Dettenheim (DE); NORENBURG, Benjamin, 76689 Karlsdorf-Neuthard (DE); SENFT, Christian, 76185 Karlsruhe-Grünwettersbach (DE); MECKELNBURG, Inga, 67117 Limburgerhof (DE); RICHTER, Sebastian, 69120 Heidelberg (DE)
(86) Internationale Anmeldenummer: PCT/EP2017/025174
(87) Internationale Veröffentlichungsnummer: WO 2018/007020

(56) Entgegenhaltungen:
- US-A1- 2012 210 037
- US-A1- 2015 105 871
- US-A1- 2016 173 021

## Beschreibung

Die Erfindung betrifft ein System von Automatisierungskomponenten mit integrierter Sicherheitseinrichtung, insbesondere ein System von Antriebskomponenten mit integrierter Sicherheitseinrichtung zum Betreiben von Elektromotoren.

Es ist bekannt, dass zur Parametrierung einer Sicherheitseinrichtung über ein Feldbussystem eine Verbindung zwischen einem Parametriergerät und einer bestimmten Sicherheitseinrichtung aufgebaut wird.

Es ist weiter bekannt, dass zum Aufbau einer Verbindung mit dieser bestimmten Sicherheitseinrichtung eine eindeutige Geräteidentifikationsinformation, typischerweise ein QR-Code oder eine Zeichenfolge, verwendet wird, die mit dieser Sicherheitseinrichtung untrennbar, insbesondere als eine Markierung auf dem Gehäuse dieser bestimmten Sicherheitseinrichtung, verknüpft ist.

Diese untrennbare Verknüpfung zwischen der Sicherheitseinrichtung und der eindeutigen Geräteidentifikationsinformation bedingt, dass nach einem Austausch der Sicherheitseinrichtung zur erneuten Parametrierung dieser getauschten Sicherheitseinrichtung die eindeutige Geräteidentifikationsinformation erneut zu ermitteln ist. Ein zusätzlicher Arbeitsaufwand entsteht auch dadurch, dass nach einem Tausch die Dokumentation der Anlage zu aktualisieren ist.

Aus der DE 10 2008 045 476 A1 ist auch bekannt, dass einzelne Komponenten eines Systems untereinander Informationen austauschen.

Aus der DE 199 61 920 B4 ist ein Verfahren zur Fern-Parametrierung und/oder Fernbedienung eines Antriebssystems bekannt.

Aus der DE 10 2006 035 112 A1 ist bekannt, dass Systemkomponenten Geräteidentifikationsinformationen enthalten, die bei einem Komponententausch einer übergeordneten Steuerungseinheit zur Verfügung gestellt werden.

**Aus der** US 2012/210037 A1 **ist als nächstliegender Stand der Technik ein Elektrogerät bekannt.**

**Aus der** US 2015/105871 A1 **ist ein Verfahren zur Parametrierung eines Feldgeräts bekannt.**

**Aus der** US 2016/173021 A1 **ist ein Umrichter bekannt.**

Der Erfindung liegt daher die Aufgabe zugrunde, die sichere Identifizierung einer Sicherheitseinrichtung über ein Feldbussystem weiterzubilden.

Erfindungsgemäß wird die Aufgabe bei dem System von Automatisierungskomponenten mit integrierter Sicherheitseinrichtung nach den in Anspruch 1 und bei dem Verfahren nach den in Anspruch 8 angegebenen Merkmalen gelöst.

Wichtige Merkmale bei dem System von Automatisierungskomponenten mit integrierter Sicherheitseinrichtung sind, dass es besteht:
- mindestens einer Sicherheitseinrichtung,
   wobei jede Sicherheitseinrichtung eine physikalische Schnittstelle für den Datenaustausch mit einem Schlüsselspeicher zur Verfügung stellt,
   wobei die Reichweite der physikalischen Schnittstelle räumlich begrenzt ist, insbesondere sich nur auf die unmittelbare Nähe um die Sicherheitseinrichtung bezieht,
   wobei der Schlüsselspeicher ortsgebunden, insbesondere räumlich mit einem spezifischen Punkt innerhalb eines Gesamtsystems fest zuordenbar, ist,
   wobei der Schlüsselspeicher eine eindeutige Identifikationsinformation enthält,
   wobei diese eindeutige Identifikationsinformation von der Sicherheitseinrichtung auslesbar ist,
   wobei diese eindeutige Identifikationsinformation zusätzlich auch von einem Anwender, insbesondere von der Gehäuseoberfläche des Schlüsselspeichers, ablesbar ist,
   wobei diese eindeutige Identifikationsinformation des Schlüsselspeichers der Sicherheitseinrichtung wiederum als eindeutige Geräteidentifikationsinformation, insbesondere zur sicheren Identifizierung der Sicherheitseinrichtung innerhalb des Gesamtsystems, dient,
   wobei jede Sicherheitseinrichtung mit einem Feldbussystem verbindbar ist,
- und einem Parametriergerät,
   wobei das Parametriergerät ebenfalls mit diesem Feldbussystem verbindbar ist,
   und wobei dieses Parametriergerät befähigt ist, über das Feldbussystem jede daran angeschlossene Sicherheitseinrichtung über die aus der eindeutigen Identifikationsinformation des externen Schlüsselspeichers erzeugten eindeutigen Geräteidentifikationsinformation zu verifizieren und zu parametrieren. Von Vorteil ist dabei, dass als Geräteidentifikationsinformation anwendbare ortsgebundene und wiederverwendbare Identifikationsinformation, die unabhängig von der Sicherheitseinrichtung selbst ist, vorgesehen ist.

Der Erfindung liegt daher die Aufgabe zugrunde, die sichere Identifizierung einer Sicherheitseinrichtung über ein Feldbussystem weiterzubilden. , indem die eindeutige Geräteidentifikationsinformation unabhängig von der Sicherheitseinrichtung selbst als eigenständige und ortsgebundene, insbesondere mit einem spezifischen Punkt in der Anlage fest zuordenbaren, Geräteidentifikationsinformation dem Gesamtsystem über die Sicherheitseinrichtung zur Verfügung gestellt wird.

Bei einer vorteilhaften Ausgestaltung ist die Sicherheitseinrichtung über einen Umrichter mit dem Feldbussystem verbindbar. Von Vorteil ist dabei, dass die Sicherheitseinrichtung in den Umrichter integrierbar ist.

Bei einer vorteilhaften Ausgestaltung ist das Parametriergerät über eine übergeordnete Sicherheitssteuerung, insbesondere einer PLC, mit dem Feldbussystem verbindbar. Von Vorteil ist dabei, dass das Parametriergerät befähigt ist, nur über eine Standardverbindung zwischen Parametriergerät und der übergeordneten Sicherheitssteuerung, typischerweise über eine USB- oder Ethernet-Schnittstelle, auf die implementierten Feldbusschnittstellen der übergeordneten Sicherheitssteuerung zuzugreifen, um damit mit den daran angeschlossenen Sicherheitseinrichtungen zu kommunizieren.

Bei einer vorteilhaften Ausgestaltung ist das Feldbussystem als PROFINET, PROFIBUS, EtherNet/IP oder einem vergleichbaren dem Stand der Technik entsprechenden Kommunikationsprotokoll ausgeführt. Von Vorteil ist dabei, dass es auf eine große Anzahl von weit verbreiteten Standard-Kommunikationsbussysteme zurückgegriffen werden kann.

Bei einer vorteilhaften Ausgestaltung ist der Schlüsselspeicher mit der Sicherheitseinrichtung verbindbar, insbesondere steckverbindbar über eine Vorrichtung zum Aufnehmen des Schlüsselspeichers durch das Gehäuse der Sicherheitseinrichtung. Von Vorteil ist dabei, dass der Schlüsselspeicher physikalisch mit der Sicherheitseinrichtung verknüpft wird und ist mit dieser als eine Einheit erkennbar, also, dass Schlüsselspeicher und Sicherheitseinrichtung eineindeutig verbunden sind.

Bei einer vorteilhaften Ausgestaltung ist die im Schlüsselspeicher enthaltene eindeutige Identifikationsinformation statisch, insbesondere vom Anwender nicht veränderbar. Von Vorteil ist dabei, dass dadurch verhindert wird, dass dieselbe Identifikationsinformation öfter innerhalb des Gesamtsystems existiert.

Bei einer vorteilhaften Ausgestaltung ist der Schlüsselspeicher von der Sicherheitseinrichtung über eine elektrisch leitende Verbindung, insbesondere über eine elektrisch leitende Verbindung bestehend aus nur zwei Leitungen, typischerweise als Eindraht-Bus realisiert, auslesbar. Von Vorteil ist dabei, dass dadurch eine platzsparende und kostengünstige Realisierung des Schlüsselspeichers mit nur wenigen Bauteilen realisierbar ist.

Bei einer vorteilhaften Ausgestaltung ist der Schlüsselspeicher von der Sicherheitseinrichtung über eine elektromagnetische Verbindung, insbesondere mit RFID-Technologie realisiert, auslesbar. Von Vorteil ist dabei, dass dadurch auf kostenintensive Steckverbinder verzichtet werden kann.

Bei einer vorteilhaften Ausgestaltung ist der Schlüsselspeicher über ein Mittel, insbesondere einer Verbindungskette, fest mit dem Ort verbindbar, an dem auch die Sicherheitseinrichtung im Gesamtsystem installiert ist. Von Vorteil ist dabei, dass der ortsgebundene Bezug des Schlüsselspeichers innerhalb des Gesamtsystems somit betont wird und zusätzlich ein Schutz vor Verlust des Schlüsselspeichers selbst realisiert wird.

Bei einer vorteilhaften Ausgestaltung besitzt die Sicherheitseinrichtung eine Vorrichtung, mit der der Schlüsselspeicher fest mit der Sicherheitseinrichtung verbindbar ist, insbesondere eine Vorrichtung mit einem Mechanismus zum Verriegeln und Entriegeln der Steckverbindung. Von Vorteil ist dabei, dass damit aktiv verhinderbar ist, dass sich der Schlüsselspeicher bedingt durch starke Vibrationen von der Sicherheitseinrichtung löst und somit eine Kommunikationsverbindung zwischen Parametriergerät und dieser Sicherheitseinrichtung nicht mehr möglich ist.

Wichtige Merkmale bei dem Verfahren zum Betreiben eines Systems sind, dass das System mindestens zwei Sicherheitseinrichtungen, mit je einen Schlüsselspeicher und ein Parametriergerät umfasst,
wobei zur Herstellung einer Kommunikationsverbindung zwischen dem Parametriergerät und einer bestimmten Sicherheitseinrichtung der Schlüsselspeicher mit der Sicherheitseinrichtung über die dafür vorgesehene physikalische Schnittstelle verbunden ist,
wobei der Anwender die Identifikationsinformation des Schlüsselspeichers, der mit dieser bestimmten Sicherheitseinrichtung verbunden ist, ablesen und dem Parametriergerät zur Verfügung stellen muss,
wobei die Sicherheitseinrichtung einen Verbindungsaufbau nur dann akzeptiert, wenn die im Parametriergerät verfügbare Identifikationsinformation mit der elektronisch aus dem mit der bestimmten Sicherheitseinrichtung verbundenen Schlüsselspeicher auslesbaren eindeutigen Identifikationsinformation übereinstimmt,
wobei während des Verbindungsaufbaus ein Mittel zwischen dem Parametriergerät und der bestimmten Sicherheitseinrichtung ausgehandelt wird, insbesondere ein Sitzungsbezeichner, typischerweise eine Session-ID, die nur für eine bestimmte Zeitdauer gültig ist und mit der die weitere Kommunikation zwischen Parametriergerät und der bestimmten Sicherheitseinrichtung eindeutig dieser bestimmten Sicherheitseinrichtung zuordenbar ist,
und wobei diese Kommunikationsverbindung dazu genutzt wird über das Parametriergerät den Parameterdatensatz der bestimmten Sicherheitseinrichtung zu modifizierten.

Von Vorteil ist dabei, dass eine sichere eindeutige Identifizierung einer bestimmten Sicherheitseinrichtung innerhalb eines Gesamtsystems, zum Aufbau einer Kommunikationsverbindung zwischen einem Parametriergerät und einer bestimmten Sicherheitseinrichtung für die Parametrierung, insbesondere sicherheitsrelevanter Parameter, dieser bestimmten Sicherheitseinrichtung vorgesehen ist.

Wichtige Merkmale bei dem Verfahren zum Betreiben eines Systems sind, dass das System mindestens zwei Sicherheitseinrichtungen, mit je einen Schlüsselspeicher und ein Parametriergerät umfasst,
wobei nach Ablauf dieser bestimmten Zeitdauer der Sitzungsbezeichner seine Gültigkeit verliert und die Kommunikationsverbindung zwischen dem Parametriergerät und der bestimmten Sicherheitseinrichtung von Seiten der bestimmten Sicherheitseinrichtung abgebrochen wird. Von Vorteil ist dabei, dass die Sicherheit verbesserbar ist.

Wichtige Merkmale bei dem Verfahren zum Betreiben eines Systems sind, dass das System mindestens zwei Sicherheitseinrichtungen, mit je einen Schlüsselspeicher und ein Parametriergerät umfasst,
wobei bei Tausch einer Sicherheitseinrichtung der mit der ursprünglichen Sicherheitseinrichtung verbundene in Gesamtsystem ortsgebundene Schlüsselspeicher mit der getauschten Sicherheitseinrichtung verbunden werden muss,
wobei durch Verwendung desselben Schlüsselspeichers an derselben Stelle im Gesamtsystem dazu führt, dass das Tauschgerät dieselbe eindeutige Identifikationsnummer erhält, wie beim ursprünglichen Gerät. Von Vorteil ist dabei, dass ein einfacher Austausch der Sicherheitseinrichtung somit realisierbar ist, wobei die Dokumentation der Anlage nicht aktualisiert werden muss.

Wichtige Merkmale bei dem Verfahren zum Betreiben eines Systems sind, dass das System mindestens zwei Sicherheitseinrichtungen, mit je einen Schlüsselspeicher und ein Parametriergerät umfasst,
wobei bei Entfernen des Schlüsselspeichers eine bestehende Kommunikationsverbindung zu einem Parametriergerät abgebrochen wird. Von Vorteil ist dabei, dass eine mehrfache Verwendung eines Schlüsselspeichers und damit gegebenenfalls falsche Parametrierung wird ausschließbar ist.

Bei einer vorteilhaften Ausgestaltung ist bei einem mit der bestimmten Sicherheitseinrichtung nicht verbundenem Schlüsselspeicher das Parametriergerät keine Kommunikationsverbindung mit der bestimmten Sicherheitseinrichtung herstellbar. Von Vorteil ist dabei, dass derselbe Schlüsselspeicher nicht zur selben Zeit im Gesamtsystem mit mehreren unterschiedlichen Sicherheitseinrichtungen verbindbar ist, worauf die Eindeutigkeit der Identifikationsinformation des Schlüsselspeichers im Gesamtsystem beruht.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

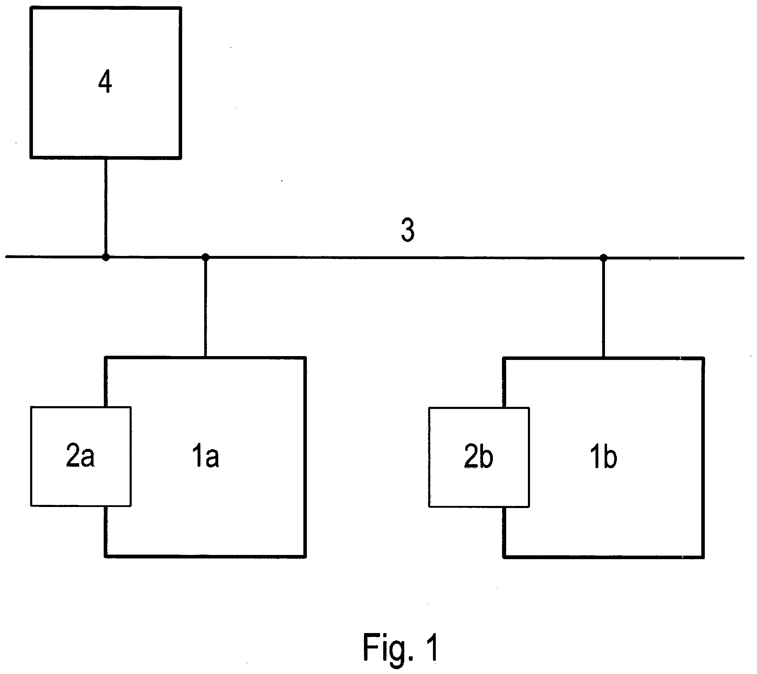

In den Figuren 1 bis 3 sind erfindungsgemäße Systeme aus Automatisierungskomponenten mit Sicherheitseinrichtungen (1) schematisch skizziert, wobei eine erste Sicherheitseinrichtung (1a) mit einem ersten Schlüsselspeicher (2a) elektrisch verbunden, insbesondere steckverbunden ist, und wobei eine weitere Sicherheitseinrichtung (1b) mit einem weiteren Schlüsselspeicher (2b) elektrisch verbunden, insbesondere steckverbunden ist.

In Figur 1 sind die Sicherheitseinrichtungen (1a, 1b) direkt mit einem Feldbussystem (3) elektrisch verbunden, insbesondere steckverbunden.

In den Figuren 2 und 3 sind Sicherheitseinrichtungen (1a, 1b) über je einen Umrichter (5a, 5b) mit einem Feldbussystem (3) elektrisch verbunden, insbesondere steckverbunden.

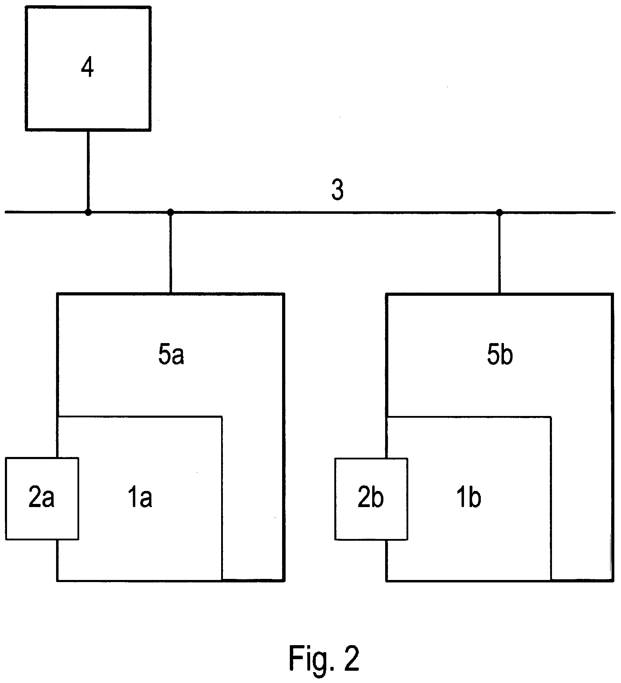

In den Figuren 1 und 2 ist ein Parametriergerät (4) direkt mit einem Feldbussystem (3) elektrisch verbunden, insbesondere steckverbunden.

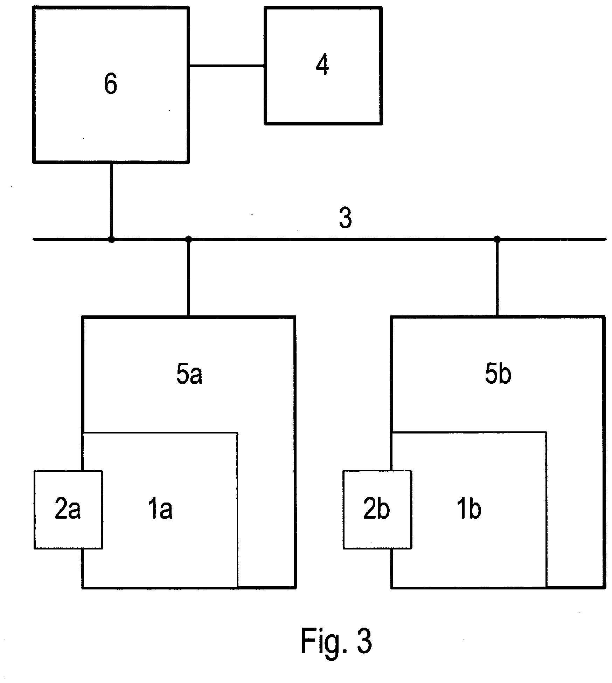

In Figur 3 ist ein Parametriergerät (4) über eine speicherprogrammierbare Steuerung (6) mit einem Feldbussystem (3) elektrisch verbunden, insbesondere steckverbunden.

### Bezugszeichenliste

- (1, 1a, 1b): Sicherheitseinrichtung
- (2, 2a, 2b): Schlüsselspeicher, ortsgebunden
- (3): Feldbussystem
- (4): Parametriergerät
- (5, 5a, 5b): Umrichter
- (6): Speicherprogrammierbare Steuerung (SPS, englisch: Programmable Logic Controller, PLC)

## Patentansprüche

1. System von Automatisierungskomponenten mit integrierter Sicherheitseinrichtung (1), insbesondere ein System von Antriebskomponenten mit integrierter Sicherheitseinrichtung (1) zum Betreiben von Elektromotoren, bestehend aus
- mindestens einer Sicherheitseinrichtung (1) **und einer bestimmten Sicherheitseinrichtung (1a),**
- **einem Schlüsselspeicher,**
- **einem Feldbussystem**
- **und einer Verbindungskette,**
wobei jede Sicherheitseinrichtung (1) eine physikalische Schnittstelle für den Datenaustausch mit dem Schlüsselspeicher (2) zur Verfügung stellt,
wobei die Reichweite der physikalischen Schnittstelle räumlich begrenzt ist, insbesondere sich nur auf die unmittelbare Nähe um die Sicherheitseinrichtung (1) bezieht,
wobei **der Schlüsselspeicher (2) mit der Sicherheitseinrichtung (1) steckverbunden über eine Vorrichtung zum Aufnehmen des Schlüsselspeichers (2) durch das Gehäuse der Sicherheitseinrichtung (1) ist,**
**wobei der Schlüsselspeicher (2) von der Sicherheitseinrichtung (1) über eine elektrisch leitende Verbindung bestehend aus nur zwei Leitungen, typischerweise als Eindraht-Bus realisiert, auslesbar ist,**
wobei der Schlüsselspeicher (2) ortsgebunden, ist,
**wobei der Schlüsselspeicher (2) über ein Mittel, nämlich die Verbindungskette, fest mit dem Ort verbindbar ist, an dem auch die Sicherheitseinrichtung (1) im System installiert ist.**
wobei der Schlüsselspeicher (2) eine eindeutige Identifikationsinformation enthält,
wobei diese eindeutige Identifikationsinformation von der Sicherheitseinrichtung (1) auslesbar ist,
wobei diese eindeutige Identifikationsinformation zusätzlich auch von der Gehäuseoberfläche des Schlüsselspeichers ablesbar ist,
wobei diese eindeutige Identifikationsinformation des Schlüsselspeichers (2) der Sicherheitseinrichtung (1) wiederum als eindeutige Geräteidentifikationsinformation, zur sicheren Identifizierung der Sicherheitseinrichtung (1) innerhalb des Systems, dient,
**wobei das System derart geeignet ausgeführt ist, dass bei Tausch einer ursprünglichen Sicherheitseinrichtung (1) gegen eine getauschte Sicherheitseinrichtung (1) der mit der ursprünglichen Sicherheitseinrichtung (1) verbundene im System ortsgebundene Schlüsselspeicher (2) mit der getauschten Sicherheitseinrichtung (1) verbunden werden muss, wobei bei dem Tausch mittels des Schlüsselspeichers (2) an derselben Stelle im System die getauschte Sicherheitseinrichtung (1) dieselbe eindeutige Identifikationsnummer erhält, wie bei der ursprünglichen Sicherheitseinrichtung (1).**
wobei jede Sicherheitseinrichtung (1) mit dem Feldbussystem (3) verbindbar ist,
- und einem Parametriergerät (4),
wobei das Parametriergerät (4) ebenfalls mit diesem Feldbussystem (3) verbindbar ist,
**wobei** dieses Parametriergerät (4) befähigt ist, über das Feldbussystem (3) jede daran angeschlossene Sicherheitseinrichtung (1) über die aus der eindeutigen Identifikationsinformation des externen Schlüsselspeichers (2) erzeugten eindeutigen Geräteidentifikationsinformation zu verifizieren und zu parametrieren,
**wobei zur Herstellung einer Kommunikationsverbindung zwischen dem Parametriergerät (4) und der bestimmten Sicherheitseinrichtung (1a) der Schlüsselspeicher (2a) mit der Sicherheitseinrichtung (1) über die dafür vorgesehene physikalische Schnittstelle verbunden ist,**
**wobei das System derart geeignet ausgeführt ist, dass die Identifikationsinformation des Schlüsselspeichers (2a), der mit dieser bestimmten Sicherheitseinrichtung (1a) verbunden ist, abgelesen und dem Parametriergerät (4) zur Verfügung gestellt wird,**
**wobei das System derart geeignet ausgeführt ist, dass die Sicherheitseinrichtung (1a) einen Verbindungsaufbau nur dann akzeptiert, wenn die im Parametriergerät (4) verfügbare Identifikationsinformation mit der elektronisch aus dem mit der bestimmten Sicherheitseinrichtung (1a) verbundenen Schlüsselspeicher (2a) auslesbaren eindeutigen Identifikationsinformation übereinstimmt,**
**wobei das System derart geeignet ausgeführt ist, dass während des Verbindungsaufbaus zwischen dem Parametriergerät (4) und der bestimmten Sicherheitseinrichtung (1a) eine Session-ID ausgehandelt wird, die nur für eine bestimmte Zeitdauer gültig ist und mit der die weitere Kommunikation zwischen Parametriergerät (4) und der bestimmten Sicherheitseinrichtung (1a) eindeutig dieser bestimmten Sicherheitseinrichtung (1a) zuordenbar ist,**
**und wobei das System derart geeignet ausgeführt ist, dass diese Kommunikationsverbindung dazu genutzt wird über das Parametriergerät (4) den Parameterdatensatz der bestimmten Sicherheitseinrichtung (1a) zu modifizieren,**
**wobei das System derart geeignet ausgeführt ist, dass nach Ablauf dieser bestimmten Zeitdauer die Session-ID ihre Gültigkeit verliert und die Kommunikationsverbindung zwischen dem Parametriergerät (4) und der bestimmten Sicherheitseinrichtung (1) von Seiten der bestimmten Sicherheitseinrichtung (1) abgebrochen wird.**

2. System nach Anspruch 1, wobei die Sicherheitseinrichtung (1) über einen Umrichter (5) mit dem Feldbussystem (3) verbindbar ist.

3. System nach mindestens einem der vorangegangenen Ansprüche, wobei das Parametriergerät (4) über eine übergeordnete Sicherheitssteuerung (6), insbesondere einer PLC, mit dem Feldbussystem (3) verbindbar ist.

4. System nach mindestens einem der vorangegangenen Ansprüche, wobei das Feldbussystem (3) als PROFINET, PROFIBUS, EtherNet/IP oder einem vergleichbaren dem Stand der Technik entsprechenden Kommunikationsprotokoll ausgeführt ist.

5. System nach mindestens einem der vorangegangenen Ansprüche, wobei die im Schlüsselspeicher (2) enthaltene eindeutige Identifikationsinformation statisch, insbesondere vom Anwender nicht veränderbar, ist.

6. System nach mindestens einem der vorangegangenen Ansprüche 1 bis 5, wobei der Schlüsselspeicher (2) von der Sicherheitseinrichtung (1) über eine elektromagnetische Verbindung, insbesondere mit RFID-Technologie realisiert, auslesbar ist.

7. System nach mindestens einem der vorangegangenen Ansprüche 1 bis 6, wobei die Sicherheitseinrichtung (1) eine Vorrichtung besitzt, mit der der Schlüsselspeicher (2) fest mit der Sicherheitseinrichtung (1) verbindbar ist, insbesondere eine Vorrichtung mit einem Mechanismus zum Verriegeln und Entriegeln der Steckverbindung.

8. Verfahren zum Betreiben eines Systems, wobei das System mindestens zwei Sicherheitseinrichtungen (1), mit je einen Schlüsselspeicher (2) und ein Parametriergerät (4) umfasst,
wobei **bei Tausch einer Sicherheitseinrichtung (1) der mit der ursprünglichen Sicherheitseinrichtung (1) verbundene im System ortsgebundene Schlüsselspeicher (2) mit der getauschten Sicherheitseinrichtung (1) verbunden werden muss,**
**wobei durch Verwendung desselben Schlüsselspeichers (2) an derselben Stelle im System dazu führt, dass das Tauschgerät dieselbe eindeutige Identifikationsnummer erhält, wie beim ursprünglichen Gerät.**
**wobei** zur Herstellung einer Kommunikationsverbindung zwischen dem Parametriergerät (4) und einer bestimmten Sicherheitseinrichtung (1a) der Schlüsselspeicher (2a) mit der Sicherheitseinrichtung (1) über die dafür vorgesehene physikalische Schnittstelle verbunden ist,
wobei die Identifikationsinformation des Schlüsselspeichers (2a), der mit dieser bestimmten Sicherheitseinrichtung (1a) verbunden ist, **abgelesen** und dem Parametriergerät (4) zur Verfügung **gestellt wird,**
wobei die Sicherheitseinrichtung (1a) einen Verbindungsaufbau nur dann akzeptiert, wenn die im Parametriergerät (4) verfügbare Identifikationsinformation mit der elektronisch aus dem mit der bestimmten Sicherheitseinrichtung (1a) verbundenen Schlüsselspeicher (2a) auslesbaren eindeutigen Identifikationsinformation übereinstimmt,
wobei während des Verbindungsaufbaus zwischen dem Parametriergerät (4) und der bestimmten Sicherheitseinrichtung (1a) eine Session-ID **ausgehandelt wird,** die nur für eine bestimmte Zeitdauer gültig ist und mit der die weitere Kommunikation zwischen Parametriergerät (4) und der bestimmten Sicherheitseinrichtung (1a) eindeutig dieser bestimmten Sicherheitseinrichtung (1a) zuordenbar ist,
und wobei diese Kommunikationsverbindung dazu genutzt wird über das Parametriergerät (4) den Parameterdatensatz der bestimmten Sicherheitseinrichtung (1a) zu modifizieren,
**wobei nach Ablauf dieser bestimmten Zeitdauer die Session-ID ihre Gültigkeit verliert und die Kommunikationsverbindung zwischen dem Parametriergerät (4) und der bestimmten Sicherheitseinrichtung (1) von Seiten der bestimmten Sicherheitseinrichtung (1) abgebrochen wird.**

9. Verfahren **nach Anspruch** 8, wobei bei Entfernen des Schlüsselspeichers (2) eine bestehende Kommunikationsverbindung zu einem Parametriergerät (4) abgebrochen wird.

10. Verfahren **nach Anspruch** 8 oder 9, wobei bei einem mit der bestimmten Sicherheitseinrichtung (1) nicht verbundenem Schlüsselspeicher (2) das Parametriergerät (4) keine Kommunikationsverbindung mit der bestimmten Sicherheitseinrichtung (1) herstellbar ist.

## Claims

1. System of automation components comprising an integrated security device (1), in particular a system of drive components comprising an integrated security device (1) for operating electric motors, consisting of
- at least one security device (1) and a specific security device (1a),
- a key store,
- a field bus system
- and a connection chain,
wherein each security device (1) makes a physical interface available for data exchange with the key store (2),
wherein the working range of the physical interface is limited in space, in particular is based solely on the immediate vicinity around the security device (1),
wherein the key store (2) is plug-connected to the security device (1) through the housing of the security device (1) by way of an apparatus for receiving the key store (2),
wherein the key store (2) can be read out by the security device (1) by way of an electrically conductive connection consisting of just two lines, typically implemented as a single-wire bus,
wherein the key store (2) is location-bound,
wherein, using a means, namely the connection chain, the key store (2) can be fixedly connected to the location at which the security device (1) is also installed within the system, wherein the key store (2) contains unique identification information,
wherein this unique identification information can be read out by the security device (1),
wherein this unique identification information can additionally be read from the housing surface of the key store,
wherein this unique identification information of the key store (2) of the security device (1) is in turn used as unique instrument identification information, for securely identifying the security device (1) within the system,
wherein the system is configured suitably such that, when an original security device (1) is replaced with a replacement security device (1), the key store (2) connected to the original security device (1) and location-bound in the system has to be connected to the replacement security device (1), wherein, during the replacement, the replacement security device (1) is given the same unique identification number as the original security device (1) by means of the key store (2) at the same place in the system,
wherein each security device (1) can be connected to the field bus system (3),
- and a parameterization instrument (4),
wherein the parameterization instrument (4) can likewise be connected to said field bus system (3),
wherein, by means of the field bus system (3), said parameterization instrument (4) is able to verify and parameterize each security device (1) connected to said field bus system, using the unique instrument identification information generated from the unique identification information of the external key store (2),
wherein, to establish a communication connection between the parameterization instrument (4) and the specific security device (1a), the key store (2a) is connected to the security device (1) via the physical interface provided for that purpose,
wherein the system is configured suitably such that the identification information of the key store (2a) connected to said specific security device (1a) is read and made available to the parameterization instrument (4),
wherein the system is configured suitably such that the security device (1a) accepts the establishment of a connection only when the identification information available in the parameterization instrument (4) matches the unique identification information that can be electronically read out from the key store (2a) connected to the specific security device (1a), wherein the system is configured suitably such that, while the connection between the parameterization instrument (4) and the specific security device (1a) is being established, a session ID is negotiated, which is valid only for a specific period of time and using which the further communication between the parameterization instrument (4) and the specific security device (1a) can be unambiguously assigned to said specific security device (1a),
and wherein the system is configured suitably such that said communication connection is used for modifying the parameter dataset of the specific security device (1a) by means of the parameterization instrument (4),
wherein the system is configured suitably such that, once said specific period of time has elapsed, the session ID becomes invalid and the communication connection between the parameterization instrument (4) and the specific security device (1) is broken by the specific security device (1).

2. System according to claim 1, wherein the security device (1) can be connected to the field bus system (3) by means of a converter (5).

3. System according to at least one of the preceding claims, wherein the parameterization instrument (4) can be connected to the field bus system (3) by means of a superordinate fail-safe control system (6), in particular a PLC.

4. System according to at least one of the preceding claims, wherein the field bus system (3) is configured as a PROFINET, PROFIBUS, Ethernet/IP or a similar communication protocol corresponding to the state of the art.

5. System according to at least one of the preceding claims, wherein the unique identification information contained in the key store (2) is static, in particular cannot be changed by the user.

6. System according to at least one of preceding claims 1 to 5, wherein the key store (2) can be read out by the security device (1) via an electromagnetic connection, implemented in particular using RFID technology.

7. System according to at least one of preceding claims 1 to 6, wherein the security device (1) has an apparatus by which the key store (2) can be fixedly connected to the security device (1), in particular an apparatus having a mechanism for locking and unlocking the plug connection.

8. Method for operating a system, wherein the system comprises at least two security devices (1), each comprising a key store (2) and a parameterization instrument (4), wherein, when a security device (1) is replaced, the key store (2) connected to the original security device (1) and location-bound in the system has to be connected to the replacement security device (1),
wherein, by using the same key store (2) at the same place in the system, the replacement instrument is given the same unique identification number as the original instrument, wherein, to establish a communication connection between the parameterization instrument (4) and a specific security device (1a), the key store (2a) is connected to the security device (1) via the physical interface provided for that purpose,
wherein the identification information of the key store (2a) connected to said specific security device (1a) is read and made available to the parameterization instrument (4),
wherein the security device (1a) accepts the establishment of a connection only when the identification information available in the parameterization instrument (4) matches the unique identification information that can be electronically read out from the key store (2a) connected to the specific security device (1a),
wherein, while the connection between the parameterization instrument (4) and the specific security device (1a) is being established, a session ID is negotiated, which is valid only for a specific period of time and using which the further communication between the parameterization instrument (4) and the specific security device (1a) can be unambiguously assigned to said specific security device (1a),
and wherein said communication connection is used for modifying the parameter dataset of the specific security device (1a) by means of the parameterization instrument (4), wherein, once said specific period of time has elapsed, the session ID becomes invalid and the communication connection between the parameterization instrument (4) and the specific security device (1) is broken by the specific security device (1).

9. Method according to claim 8, wherein, when the key store (2) is removed, an existing communication connection to a parameterization instrument (4) is broken.

10. Method according to claim 8 or claim 9, wherein, if a key store (2) is not connected to the specific security device (1), the parameterization instrument (4) cannot establish a communication connection to the specific security device (1).

## Revendications

1. Système de composants d'automatisation à dispositif de sécurité (1) intégré, notamment système de composants d'entraînement à dispositif de sécurité (1) intégré dévolu à l'actionnement de moteurs électriques, comprenant
• au moins un dispositif de sécurité (1) et un dispositif de sécurité (1a) déterminé ;
• une mémoire de clés ;
• un système de bus de terrain ;
• et une chaîne de connexion,
chaque dispositif de sécurité (1) procurant un interface physique affecté à l'échange de données avec la mémoire de clés (2),
le rayon d'action dudit interface physique étant limité dans l'espace et se référant, en particulier, uniquement à la proximité immédiate environnant ledit dispositif de sécurité (1),
ladite mémoire de clés (2) étant raccordée par enfichage au dispositif de sécurité (1), par l'intermédiaire d'un agencement conçu pour recevoir ladite mémoire de clés (2) à travers le boîtier dudit dispositif de sécurité (1),
laquelle mémoire de clés (2) peut être lue, par ledit dispositif de sécurité (1), par l'intermédiaire d'une jonction électriquement conductrice composée de deux conducteurs seulement et concrétisée, typiquement, en tant que bus unifilaire,
ladite mémoire de clés (2) étant implantée avec localisation stationnaire,
laquelle mémoire de clés (2) peut être reliée rigidement par l'intermédiaire d'un moyen, à savoir de la chaîne de connexion, à l'endroit auquel le dispositif de sécurité (1) est, lui aussi, installé dans le système,
sachant que ladite mémoire de clés (2) renferme une information d'identification univoque,
cette information d'identification univoque pouvant être lue par le dispositif de sécurité (1),
cette information d'identification univoque pouvant aussi être lue, additionnellement, par la surface du boîtier de ladite mémoire de clés,
sachant que cette information d'identification univoque de ladite mémoire de clés (2) du dispositif de sécurité (1) sert, à son tour, d'information univoque d'identification d'appareil ciblant l'identification sûre dudit dispositif de sécurité (1) à l'intérieur du système,
lequel système est adéquatement réalisé de façon telle que, lors du remplacement d'un dispositif de sécurité (1) initial par un dispositif de sécurité (1) remplacé, la mémoire de clés (2) reliée audit dispositif de sécurité (1) initial et implantée avec localisation stationnaire, dans ledit système, doit être reliée audit dispositif de sécurité (1) remplacé, sachant que lors du remplacement, ledit dispositif de sécurité (1) remplacé reçoit au moyen de ladite mémoire de clés (2), au même emplacement dans ledit système, le même numéro d'identification univoque que celui dudit dispositif de sécurité (1) initial,
chaque dispositif de sécurité (1) pouvant alors être raccordé au système (3) de bus de terrain,
• et un appareil de paramétrage (4),
lequel appareil de paramétrage (4) peut être semblablement raccordé à ce système (3) de bus de terrain,
sachant que, par l'intermédiaire dudit système (3) de bus de terrain, cet appareil de paramétrage (4) est en capacité de vérifier et de paramétrer chaque dispositif de sécurité (1) qui lui est raccordé, par le moyen de l'information univoque d'identification d'appareil engendrée à partir de l'information d'identification univoque de la mémoire de clés (2) extérieure,
sachant que, pour instaurer une liaison de communication entre ledit appareil de paramétrage (4) et le dispositif de sécurité (1a) déterminé, la mémoire de clés (2a) est reliée au dispositif de sécurité (1) par l'intermédiaire de l'interface physique prévu à cet effet,
le système étant adéquatement réalisé de telle sorte que l'information d'identification de ladite mémoire de clés (2a), reliée audit dispositif de sécurité (1a) déterminé, soit lue et tenue à disposition dudit appareil de paramétrage (4),
ledit système étant adéquatement réalisé de telle manière que ledit dispositif de sécurité (1a) accepte un établissement de la connexion uniquement lorsque ladite information d'identification, disponible dans ledit appareil de paramétrage (4), coïncide avec l'information d'identification univoque pouvant être lue électroniquement à partir de ladite mémoire de clés (2a) reliée audit dispositif de sécurité (1a) déterminé,
ledit système étant adéquatement réalisé de façon telle que, lors de l'établissement de la connexion entre ledit appareil de paramétrage (4) et ledit dispositif de sécurité (1a) déterminé, il s'opère un échange d'identifiant de session qui est valable seulement pour une durée déterminée et à l'aide duquel la communication ultérieure, entre ledit appareil de paramétrage (4) et ledit dispositif de sécurité (1a) déterminé, peut être attribuée de manière univoque à ce dispositif de sécurité (1a) déterminé,
et ledit système étant adéquatement réalisé de telle sorte qu'il soit tiré parti de cette liaison de communication pour modifier, par le moyen dudit appareil de paramétrage (4), le jeu de données de paramètres dudit dispositif de sécurité (1a) déterminé,
sachant que ledit système est adéquatement réalisé de telle manière qu'à l'expiration de cette durée déterminée, ledit identifiant de session perde sa validité et ladite liaison de communication, entre ledit appareil de paramétrage (4) et ledit dispositif de sécurité (1a) déterminé, soit rompue de la part dudit dispositif de sécurité (1a) déterminé.

2. Système selon la revendication 1, dans lequel le dispositif de sécurité (1) peut être raccordé au système (3) de bus de terrain par l'intermédiaire d'un convertisseur (5).

3. Système selon au moins l'une des revendications précédentes, dans lequel l'appareil de paramétrage (4) peut être raccordé au système (3) de bus de terrain par l'intermédiaire d'une commande de sécurité (6) de niveau supérieur, d'un CLP en particulier.

4. Système selon au moins l'une des revendications précédentes, dans lequel le système (3) de bus de terrain est réalisé en tant que PROFINET, PROFIBUS, EtherNet/IP, ou sous la forme d'un protocole de communication comparable correspondant à l'état de la technique.

5. Système selon au moins l'une des revendications précédentes, dans lequel l'information d'identification univoque, renfermée par la mémoire de clés (2), est statique et ne peut notamment pas être modifiée par l'utilisateur.

6. Système selon au moins l'une des revendications 1 à 5, dans lequel la mémoire de clés (2) peut être lue, par le dispositif de sécurité (1), par l'intermédiaire d'une liaison électromagnétique notamment concrétisée par une technologie RFID.

7. Système selon au moins l'une des revendications 1 à 6, dans lequel le dispositif de sécurité (1) est doté d'un agencement par lequel la mémoire de clés (2) peut être reliée rigidement audit dispositif de sécurité (1), notamment d'un agencement comportant un mécanisme affecté au verrouillage et au déverrouillage du raccordement par enfichage.

8. Procédé d'exploitation d'un système, lequel système inclut au moins deux dispositifs de sécurité (1) munis, à chaque fois, d'une mémoire de clés (2) et d'un appareil de paramétrage (4),
sachant que, lors du remplacement d'un dispositif de sécurité (1), la mémoire de clés (2) reliée au dispositif de sécurité (1) initial et implantée avec localisation stationnaire, dans ledit système, doit être reliée au dispositif de sécurité (1) remplacé,
sachant que l'utilisation de la même mémoire de clés (2), au même emplacement dans ledit système, implique que l'appareil remplacé reçoit le même numéro d'identification univoque que celui de l'appareil initial,
sachant que, pour instaurer une liaison de communication entre ledit appareil de paramétrage (4) et un dispositif de sécurité (1a) déterminé, ladite mémoire de clés (2a) est reliée au dispositif de sécurité (1) par l'intermédiaire de l'interface physique prévu à cet effet,
l'information d'identification de ladite mémoire de clés (2a), reliée audit dispositif de sécurité (1a) déterminé, étant lue et tenue à disposition dudit appareil de paramétrage (4), sachant que ledit dispositif de sécurité (1a) accepte un établissement de la connexion uniquement lorsque ladite information d'identification, disponible dans ledit appareil de paramétrage (4), coïncide avec l'information d'identification univoque pouvant être lue électroniquement à partir de ladite mémoire de clés (2a) reliée audit dispositif de sécurité (1a) déterminé,
sachant que, lors de l'établissement de la connexion entre ledit appareil de paramétrage (4) et ledit dispositif de sécurité (1a) déterminé, il s'opère un échange d'identifiant de session qui est valable seulement pour une durée déterminée et à l'aide duquel la communication ultérieure, entre ledit appareil de paramétrage (4) et ledit dispositif de sécurité (1a) déterminé, peut être attribuée de manière univoque à ce dispositif de sécurité (1a) déterminé,
sachant qu'il est tiré parti de cette liaison de communication pour modifier, par le moyen dudit appareil de paramétrage (4), le jeu de données de paramètres dudit dispositif de sécurité (1a) déterminé,
et sachant qu'à l'expiration de cette durée déterminée, ledit identifiant de session perd sa validité et ladite liaison de communication, entre ledit appareil de paramétrage (4) et ledit dispositif de sécurité (1a) déterminé, est rompue de la part dudit dispositif de sécurité (1a) déterminé.

9. Procédé selon la revendication 8, dans lequel une liaison de communication existante, avec un appareil de paramétrage (4), est rompue lors de l'enlèvement de la mémoire de clés (2).

10. Procédé selon la revendication 8 ou 9, dans lequel l'appareil de paramétrage (4) ne peut instaurer aucune liaison de communication, avec le dispositif de sécurité (1a) déterminé, dans le cas où une mémoire de clés (2) n'est pas raccordée audit dispositif de sécurité (1a) déterminé.
